# EUROPÄISCHE PATENTSCHRIFT

(11) **EP 2 197 623 B1**
(45) Veröffentlichungstag und Bekanntmachung des Hinweises auf die Patenterteilung: **14.01.2015**
(21) Anmeldenummer: 08784866.9
(22) Anmeldetag: 18.07.2008
(51) Int. Cl.: B62D 65/02, B23K 37/04, B23P 19/10, F16M 5/00

(54) **HERSTELLVERFAHREN FÜR MASCHINEN**
PRODUCTION METHOD FOR MACHINES
PROCÉDÉ DE FABRICATION DE MACHINES

(30) Priorität: 30.08.2007 DE 102007041251
(43) Veröffentlichungstag der Anmeldung: 23.06.2010
(73) Patentinhaber: KHS GmbH, 44143 Dortmund (DE)
(72) Erfinder: JENDRICHOWSKI, Klaus, 59439 Holzwickede (DE); WIEDEMANN, Ulrich, 44135 Dortmund (DE)
(86) Internationale Anmeldenummer: PCT/EP2008/005886
(87) Internationale Veröffentlichungsnummer: WO 2009/030310

(56) Entgegenhaltungen:
- EP-A- 1 008 510
- EP-A- 1 281 471
- EP-A- 1 331 059
- EP-A2- 1 403 176
- DE-C1- 10 158 264
- FR-A1- 2 675 726
- GB-A- 2 427 175
- US-A- 2 738 866
- US-A- 3 307 894
- US-A- 4 601 091
- US-A- 5 217 288
- US-A- 6 029 562
- US-A1- 2004 238 475
- US-A1- 2005 155 319
- US-B2- 7 044 707

## Beschreibung

Die Erfindung betrifft ein Herstellverfahren für Maschinen, Insbesondere Maschinen für die Getränkeindustrie wie Reinigungsmaschinen, Pasteurisierungsmaschinen, Schrumpftunnel oder dergleichen, wobei die Bauteile der Maschine durch Schweißverfahren und durch lösbare Verbindungen aus Einzelteilen zusammengesetzt werden. Dabei wird eine nicht zur Maschine gehörenden Haltevorrichtung bereitgestellt, an der eine erste Seitenwand befestigt wird, nachfolgend wird eine zweite, gegenüberliegende Seitenwand In einem Abstand positioniert, der geringfügig größer ist als der Abstand, den die Seitenwände nach vollständigem Zusammenbau zueinander aufweisen. Im anschließenden Einbauschritt werden Mitteleinbauteile zwischen den Seitenwänden angebracht, wobei mindestens eine der Seltenwände Stützelemente aufweist, mittels welcher mindestens eine Teilzahl der Mitteleinbauten gehalten und/oder von diesen getragen werden Können. Zum Abschluss werden die Haltevorrichtungen angenähert, so dass die Maschine verschlossen wird und nachfolgend die Mittelbauteile mit den Seitenwänden mittels Laser- oder Elektronenstrahlschweißverfahren verschweißt oder mittels eines Klebe- und Nietverfahrens verbunden werden können.

Im Stand der Technik sind Maschinen bekannt, die ausgehend von einem vorgefertigten Rahmen komplettiert werden. Der Maschinenrahmen ist dabei in den wesentlichen Geometrien in allen drei Raumrichtungen festgelegt. Die Maschinenteile, Baugruppen, Böden, Motoren etc. werden in diesen Rahmen eingebracht und mit selbigem Rahmen lösbar oder nichtlösbar verbunden. Weiterhin sind ein Großteil der Baugruppen und Einbauten untereinander und mit den Seitenwänden verschweißt

Diese Fertigungsart ist bewährt, hat aber den Nachteil, dass die Ausführung von Arbeiten In dem starren Maschinenrahmen schwierig ist, wobei sich mit Fortschreiten der Arbeiten der zur Verfügung stehende Arbeitsraum immer weiter verringert. Durch den würfelartigen Grundrahmen ist weiterhin eine starke Einschränkung gegeben, was die Vorfertigung und Einbringung von komplexeren Baugruppen angeht. Die meisten Einbauten müssen daher innerhalb des Grundrahmens zusammengefügt werden. Dies ist zeitintensiv und beschwerlich für die Monteure.

Damit besteht die Aufgabe der Erfindung darin, diesen Mangel zu beheben und ein Herstellverfahren bereitzustellen, dass eine vereinfachte und schnellere Montage ermöglicht.

Dokument EP 1 008 510 zeigt ein Herstellverfahren, das ein Schweiß-verfahren und Klebeverfahren benutzt um die Bauteilen des Fahrzeugs zu verbinden.

Diese Aufgabe löst die vorliegende Erfindung durch ein Verfahren zur Maschinenfertigung von Maschinen für die Getränkeindustrie, genommen aus der Gruppe der Reinigungsmaschinen, Pasteurislerungsmaschinen, Schrumpftunnel oder dergleichen, die insbesondere für die Behandlung von Behältern, wie Flaschen, Dosen, Gläser und dergleichen geeignet sind. Die Ansprüche werden hiermit ausdrücklich auch als zur Beschreibung der Erfindung dienend benannt. Hierbei sind die Bauteile der Maschine durch Schweißverfahren und durch lösbare Verbindungen aus Einzelteilen und/oder Baugruppen zusammengesetzt, wobei mindestens die folgenden Schritte durchlaufen werden:
a) Bereitstellen einer nicht zur Maschine gehörenden Haltevorrichtung, umfassend mindestens ein Halteelement, mittels welchem mindestens eine der Seitenwände der Maschine gestützt oder getragen werden kann,
b) Erstellen und Ausrichten mindestens eines Teils einer ersten Maschinenseitenwand,
c) Erstellen und Ausrichten mindestens eines Teils einer zweiten, gegenüberliegenden Maschlnenseitenwand in einem Abstand, der geringfügig größer ist als der Abstand, den die Seitenwände nach vollständigem Zusammenbau zueinander aufweisen,
d) Positionieren von Mittelbauteilen zwischen den Seitenwänden, wobei mindestens eine der Seitenwände Stützelemente aufweist, mittels welcher mindestens eine Teilzahl der Mitteleinbauten gehalten und/oder von diesen getragen werden können (Einbauschritt),
e) Verschluss der Maschine durch Aneinanderpressung der gegenüberliegenden Seitenflächen (Verschlussschritt) und
f) Verschweißung mindestens eines Teils der Mitteleinbauten mit den Seitenflächen, wobei idealerweise ein Laser- oder Elektronenstrahlschweißverfahren eingesetzt wird,
g) wobei wenigstens ein Mittelbauteil mit wenigstens einer Seitenwand und insbesondere mit zwei Seitenwänden mittels Klebe- und Nietverfahren verbunden wird.

Üblicherweise wird man alle Mitteleinbauten mit demselben oder weitgehend selben Verfahren an den Seitenwänden befestigen. Dabei dem Klebe- und Nietverfahren kommt idealerweise ein einseitiges Nietsystem und -verfahren zur Anwendung, bei welchem nur von einer Seite mittels eines Nietwerkzeuges auf die Niete eingewirkt wird. Beispiele hierfür sind das Blindnieten oder Verbindungen mittels eines Schließringbolzens.

Dabei sollen im Zusammenhang mit diesem Verfahren und der Vorrichtung unter den Begriffen Mitteleinbauten und/oder Mitteleinbauteilen solche Elemente verstanden werden, die im Wesentlichen selbsttragend den Abstand von einer Seitenwand zur anderen, bzw. zu den dort vorgesehenen Stützelementen, überbrücken. Die sonstigen statischen oder beweglichen Einbauten, die bei einem derartigen Verfahren und Maschine zu sehen sind, werden nachfolgend nicht näher betrachtet oder genannt. Üblicherweise sind die Mitteleinbauten selbst vorgefertigte Baugruppen, die aus einer Vielzahl von Einzelkomponenten bestehen.

Als Kleber für das genannten Klebe- und Nietverfahren kann zum Beispiel ein im Prinzip bekanntes 2-komponentige Epoxydharzsysteme verwendet werden, was auch als "Plastik-Stahl" bekannt ist. Diese Kleber umfassen eine Harz- und eine Härterkomponente in geeigneten Mischungsverhältnissen, wobei abhängige vom zu behandelnden Werkstoff und der damit verbundenen Klebeaufgabe, der Harzkomponente metallische Zusätze wie Stahl- bzw. Aluminiumpulver oder mineralische Füllstoffe beigemischt sein können. Der dann abhängig vom Einsatzfall einzusetzende und erforderliche Härter bestimmt die Viskosität und das Aushärteverhalten des Klebesystems. Derartige Kleber sind im Prinzip bekannt.

Der besondere Vorteil dieser Kombination aus Kleber und Nieten besteht darin, dass keine lokalen Wärmeeinträge erforderlich sind und durch die Nieten eine absolut formschlüssige Anpressung der zu verklebenden Flächen erfolgt, die damit auch gas- und flüssigkeitsdicht wird. Eine derartige Klebe-Nietverbindung ist deutlich weniger aufwändig, als eine großflächige, vertikale Laserschweißung.

Eine Verbesserung besteht darin, die Mitteleinbauten im Schritt d) zuerst an einer der beiden Seitenwände zu befestigen. Dies kann über geeignete Schraub- oder Nietverbindung erfolgen sowie ein geeignetes Schweißverfahren. Zur Vermeidung von thermisch bedingten Verformungen wird ein Strahlverfahren eingesetzt, wie zum Beispiel ein Laserschweißverfahren oder idealerweise ein dem Schritt g) analoges Klebe- und Nietverfahren. Im Bereich der gegenüberliegenden Seitenwand, die geringfügig von den freien Enden der Mitteleinbauten beabstandet ist, liegen die Mitteleinbauteile lose auf den dort vorgesehenen Stützelementen auf. Auf diese Weise bleibt der Arbeitsbereich bis zum Montageende in Schritt f) oder g) frei zugänglich und weitere Mitteleinbauten können leicht hinzugefügt und untereinander verbunden und/oder verschweißt werden. Die einseitige Befestigung der Mitteleinbauten an der ersten Seitenwand kann dabei selektiv und/oder zeitlich versetzt erfolgen. Es bietet sich zum Beispiel an, nur sehr große und schwere Mitteleinbauten einzeln anzuschweißen und nach dem Verschlussschritt, alle restlichen Mitteleinbauten in einem fortlaufenden Schweißvorgang zu verschweißen oder eine Kleb-Nietung vorzunehmen. Eine Ausführungsform des Verfahrens besteht darin, dass die mittels Klebe- und Nietverfahren zu verbindenden Mitteleinbauten an den Außenkanten oder Außenseiten Stirnelemente aufweisen. Diese Stirnelemente können in einem separaten Verfahren z.B. auf einer Laserschweißvorrichtung stumpf auf Stoß oder in eine anderen geeigneten Art und Weise angeschweißt werden. Im Einbaufall sind diese Stirnelemente parallel oder im Wesentlichen parallel zu den Seitenflächen der zu bildenden Maschine ausgerichtet. Die außen liegenden Flächen der Stirnelemente werden nun vor dem Zusammenfügen an eine der Außen- oder Seitenwände mit einem Kleber ganz oder teilweise beschichtet. Zur Aufbringung der erforderlichen Anpresskraft und verrückfreien Fixierung während der Aushärtphase wird mittels des Nietverfahrens beziehungsweise mindestens einer Nietverbindung eine bleibende Verbindung geschaffen. In der Regel wird man eine Mehrzahl von gleichmäßig über die anzupressende Fläche verteilte Nieten vorsehen.

Eine Verbesserung und Verkürzung des Verfahrens besteht darin, dass während des gesamten oder zeitweise während der Aushärtephase die mit den Stirnelementen in Kontakt stehenden Bereiche der Seitenwände von der Rückseite der Seitenwände aus erwärmt werden. Hierzu werden idealerweise Heizluftgebläse oder flammlose Strahler verwendet wird.

In einer Verfahrensvariante werden statt der Nieten auch Schrauben verwendet, um die erforderliche Anpressung zu realisieren. Dies wird vorrangig dann relevant, wenn Mitteleinbauten, die an einem der Enden der Maschine eingebaut werden bzw. angeordnet sind, von beiden Seiten der Außen- oder Seitenwand gut erreichbar sind.

Das Verfahren kann verbessert werden, indem als Nieten im Prinzip bekannte Schließringbolzen verwendet werden, mittels welcher besonders hohe Anpresskräfte auf die zu verbindenden Flächen und Bauteile aufgebrachte werden können. Dieser Schließringbolzen besteht aus einem Bolzen und einem Schließring, wobei der Bolzen einen Kopf und einen mindestens teilweise geriffelten Schaft aufweist. Nach dem Einsetzen des Bolzens in die zu verbindenden Elemente, wird der Schließring über den Schaft geführt und mit einem Setzwerkzeug einseitig gegriffen, auf die Oberfläche des zu verbindenden Elementes gepresst und anschließend und nachfolgend kaltverformend in die Rillen oder Riffelung eingepresst (Setzvorgang). Als abschließenden Verfahrensschritt wird der Schaft an einer Sollbruchstelle oberhalb des Schließringes abgetrennt. Mit geeigneten Setzwerkzeugen, bspw. hydraulischen oder hydropneumatischen Setzwerkzeugen und entsprechenden Spannringbolzen, können Vorspannungen von über 17 kN pro Bolzen erreicht werden. Idealerweise wird eine Vorspannkraft von 3 oder mehr kN aufgebracht.

Abhängig von den jeweiligen Fertigungsmöglichkeiten, kann mindestens ein Teil der Schweißverbindungen von außen durch die Seitenwand hindurch vorgenommen werden, in dem von außen die im Inneren der Maschine stumpf oder planparallel anliegenden Mitteleinbauten durch die Behälterwand hindurch an dieser und/oder untereinander verschweißt werden, was die Montage weiter beschleunigt, da derartige Schweißvorgänge in einer gut zugänglichen Position und/oder maschinell vorgenommen werden können.

Um zu einer sehr materialarmen Leichtbauweise zu gelangen, wird in einer weiteren Variante des Verfahrens die erste Seitenwand aus im Wesentlichen zwei parallelen Elementen gebildet. Diese umfassen eine Innenwand und eine Außenwand, welche über Stege beabstandet und miteinander verbunden sind. Idealerweise weist die Innenwand eine Vielzahl von Aussparungen und Öffnungen auf, durch welche die Stützelemente hindurchgeführt und/oder Innen- und Außenwand miteinander verbunden werden können. Dabei ragen die Stützelemente in den Innenraum der Maschine, so dass die Mitteleinbauten gemäß Schritt d) getragen und/oder gestützt werden können.

Dabei ist es vorteilhaft, wenn die Stützelemente in einem ersten Schritt an der Außenwand befestigt oder mit dieser verbunden werden und anschließend die Innenwand auf die Stützelemente geschoben wird.

Bei einem verbesserten Verfahren werden Aussparungen und Öffnungen in den Seitenwänden in den Seitenwänden mittels eines Strahlverfahrens und idealerweise mittels Elektronen- oder Laserstrahlverfahren hergestellt. Diese Laser- oder Elektronenstrahlverfahren zum Materialschnitt sind sehr exakt, so dass kein oder fast keine Nachbearbeitung erforderlich ist und die aus der automatischen Fertigung kommenden Halbzeuge direkt eingebaut werden können.

Zur Verbesserung der Einrichtung und zur Kontrolle der Montage ist es hilfreich, wenn vor dem Einbau in Schritt b) und/oder c) mindestens auf einer der Seitenwände mittels eines Elektronenstrahl- und/oder Laserstrahlverfahrens Bemaßungen und/oder Anrisslinien aufgebracht werden. Dies kann in einem Arbeitsschritt mit dem Strahlschneiden von Öffnungen und Aussparungen erfolgen und verlängert die Bearbeitung daher nur unwesentlich.

Bei einer optimierten Verfahrensvariante werden die Mitteleinbauten so weit wie möglich aus mehreren oder einer Vielzahl von Einzelteilen bestehenden Komponenten vorgefertigt. Insbesondere gas- und/oder flüssigkeitsführenden Zwischenböden können als Fertigbauteile montiert werden. Kleine Öffnungen In den Seitenflächen, die gegebenenfalls zur Aufnahme von Stützelementen vorgesehen werden müssen, werden nachfolgende von außen durch die Seitenwand dicht geschweißt. Der besondere Vorteil des vorliegenden Verfahrens liegt darin, dass die Mitteleinbauten und sonstige Einbauten der Maschine im Wesentlichen nacheinander von unten nach oben eingebaut werden können und der Kopfraum bis zum Verschlussschritt zugänglich bleibt, so dass unterstützend Hebe- und Kranwerkzeuge bis zum Montageende eingesetzt werden können.

Eine Maschine für die Getränkeindustrie und Lebensmittelindustrie, insbesondere eine Reinigungsmaschine, eine Pasteurisierungsmaschine, ein Schrumpftunnel oder dergleichen, die insbesondere für die Behandlung von Behältern, wie Flaschen, Dosen, kleinen Fässchen, Gläsern und dergleichen geeignet sind, kann mindestens ein Segment, welches nach einer der vorstehenden Verfahrensvarianten hergestellt wurde, umfassen. Idealerweise besteht die Maschine aus mehreren Segmenten, die zeitgleich oder nacheinander nach einem Verfahren gemäß einem der vorgenannten Ansprüche hergestellt wurden.

Dabei weist diese Maschine eine Vielzahl von Stützelementen auf, auf welchen mindestens ein Teil der Mitteleinbauten mit mindestens einer Teilfläche aufliegen oder sich daran abstützen. In einer Variante der Maschine weist mindestens eine Teilzahl der Stützelemente einen Stegbereich und einen Trägerbereich auf, wobei idealerweise die Stützelemente mindestens an einem Ende ein Gewinde oder einen Nietkopf aufweisen. Dabei sind mindestens bei einem Teil der Mitteleinbauten Stirnelemente an den äußeren zur Seitenwand der Maschine weisenden Kanten oder Bereichen vorgesehen und zwischen diesen Stirnelementen der jeweiligen Seitenwand ist mindestens auf Teilflächen ein Kleber vorgesehen, wobei diese Stirnelemente mittels mindestens einer Niete an mindestens einer Seitenfläche fixiert sind. In der Regel wir pro Stirnelement eine Mehrzahl von Nieten vorgesehen sein.

In einer Variante des Verfahrens und mit auch in einer verbesserten Vorrichtungsform sind die Mitteleinbauten ausschließlich mittels Klebe- und Nietverfahren an den Seitenwänden befestigt, eine von Außen durch die Seitenwand geführte Laserschweißung entfällt vollständig.

Durch eine Vorrichtung zur Herstellung von Maschinen für die Getränkeindustrie und Lebensmittelindustrie, insbesondere eine Reinigungsmaschine, eine Pasteurisierungsmaschine, ein Schrumpftunnel oder dergleichen, die zum Beispiel für die Behandlung von Behälter, wie Flaschen, Dosen, Gläser und dergleichen geeignet sind, ist die Durchführung einer der vorgenannten Verfahrensvarianten möglich. Hierzu weist die Vorrichtung ein Fußelement und nur einen seitlichen Tragrahmen für eine einzelne oder doppellagige Seitenwand der Maschine auf. Weiterhin ist an dem mindestens einen Tragrahmen eine Montageschablone angebracht, an der mindestens ein Träger- oder Stützelement angeordnet Ist, um die Seitenwand zu fixieren.

Alternativ weist die Vorrichtung genau zwei gegenüberliegende Tragrahmen und mindestens ein Fußelement auf, um zwei Seitenwände aufzunehmen. Hierzu Ist idealerweise an dem zweiten Tragrahmen ebenfalls eine Montageschablone angebracht ist, an welchem mindestens ein Träger- oder Stützelement angeordnet ist, wobei idealerweise eine Vielzahl von Träger- oder Stützelementen vorgesehen sind.

Es ist der Vorteil von Montageschablonen, dass auf ein und dem selben Tragrahmen oder Tragrahmenpaar unterschiedliche Maschinen oder Maschinenabschnitte/-segmente montiert werden können, in dem die jeweils entsprechenden Montageschablonen vorgesehen werden.

Um die Seitenwände im Verschlussschritt aneinander anzunähern und die Lücken zu den freien Enden der Mitteleinbauten zu schließen ist es vorteilhaft, wenn der eine oder mindestens einer der Tragrahmen verfahren werden kann. Alternativ kann mindestens eine der Montageschablonen an dem oder den Tragrahmen verfahrbar gelagert sein.

Dabei ist es vorteilhaft, wenn der eine oder mindestens einer der Tragrahmen durch mindestens eine Schiene geführt Ist.

Das erfindungsgemäße Fertigungsverfahren, die Maschine und die Fertigungsvorrichtung sind an Beispielen erläutert, ohne auf die konkrete Ausführungsform eingeschränkt zu sein.
Fig. 1: Perspektivische Darstellung des Tragrahmens zu Beginn des Montageschrittes einer Reinigungsmaschine
Fig. 2: Perspektivische Darstellung einer sektionsweisen Fertigung einer Reinigungsmaschine
Fig. 3: Schnittzeichnung durch eine Klebenietverbindung zwischen einer Außen- oder Seitenwand und einem Mitteleinbauteil.
Fig. 4: Perspektivische Darstellung eines Mittelbauteils.

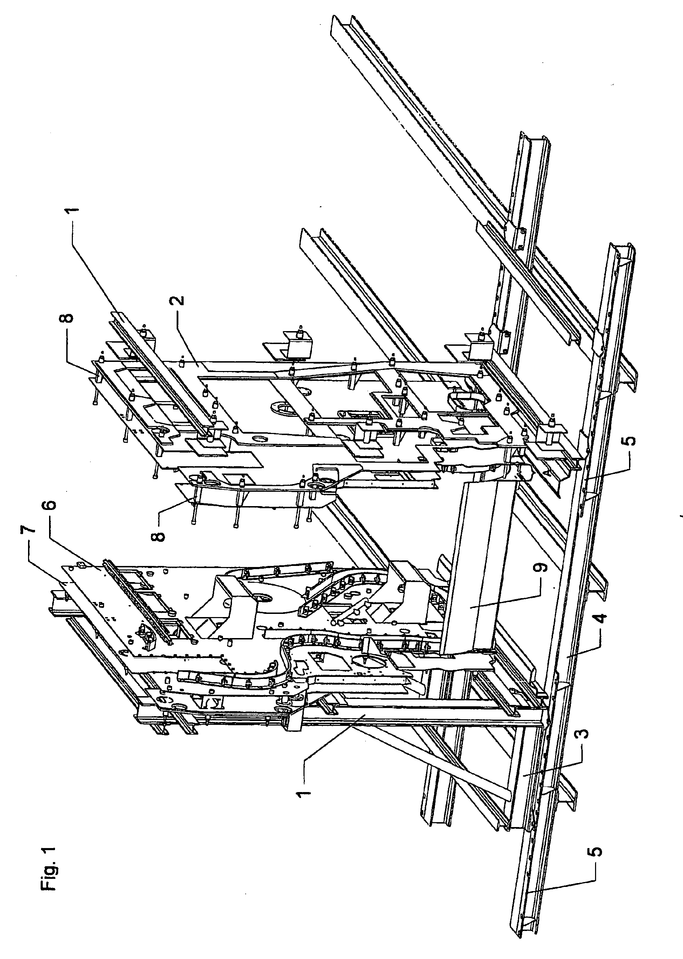

Fig. 1 zeigt die erfindungsgemäße Vorrichtung mit zwei Tragrahmen 1, auf denen Montageschablonen 2 befestigt sind, die wiederum Seitenwände tragen. Dargestellt ist die Vorrichtung zu Beginn des Verfahrensschrittes d) dem Einbauschritt bei der Montage einer Reinigungsmaschine.

Jeder der Tragrahmen 1 weist ein Fußteil 3 auf, welche auch einem gemeinsamen Trag- und Schienenkonstruktion 4 stehen, wobei der rechte Tragrahmen aus Gründen der Übersichtlichkeit nicht vollständig dargestellt ist. Der Tragrahmen 1 mit dem Fußteil 3 ist verschiebbar auf der in Richtung des gegenüberliegenden Tragrahmens 1 gelagert und kann auf einer an dem Trag- und Schienenkonstruktion 4 befestigten Lochleiste 5 in unterschiedlichen Positionen fixiert werden. Die Seitenwände bestehen aus einer Innenwand 6 und einer Außenwand 7, wobei die Innenwand 6 mittels einer Vielzahl von Stützelementen 8 gehalten und von der Außenwand 7 beabstandet wird. In der gezeigten Varianten weisen die Stützelemente 8 an ihrem äußeren Ende ein nicht dargestelltes Gewinde auf, so dass bei der Montage die Außenwand 8 mit der Montageschablone 2 und/oder dem Tragrahmen 1 verschraubt werden kann.

Weiterhin zeigt Fig. 1 einen Mitteleinbauteil 9, das an der ersten Seitenwand bzw. der Innenwand 6 anliegt und mit dieser in nicht dargestellter Weise ebenfalls über die Stützelemente 8 verschraubt wurde. Das freie Ende dieses Mitteleinbauteils 9 ruht auf dem freien Ende eines aus der rechten Seitenwand herausragenden Stützelementes 8 mit dem Abstand A, der als geschweifte Klammer dargestellt ist.

Nach dem Einbau aller Mittelbauteile 9 wird der rechte Trägerrahmen 1 auf der Schiene 4 in Richtung des gegenüberliegenden Trägerrahmens 1 verschoben, bis die Mittelbauteile beidseitig kraftschlüssig anliegen und verschweißt werden können. Das Laserschweißen erfolgt in dem hier gezeigten Beispiel weitestgehend von außen, wozu die Außenwand 7 große Zugangsöffnungen aufweist. Diese Zugangsöffnungen werden nachfolgend teilweise verschlossen.

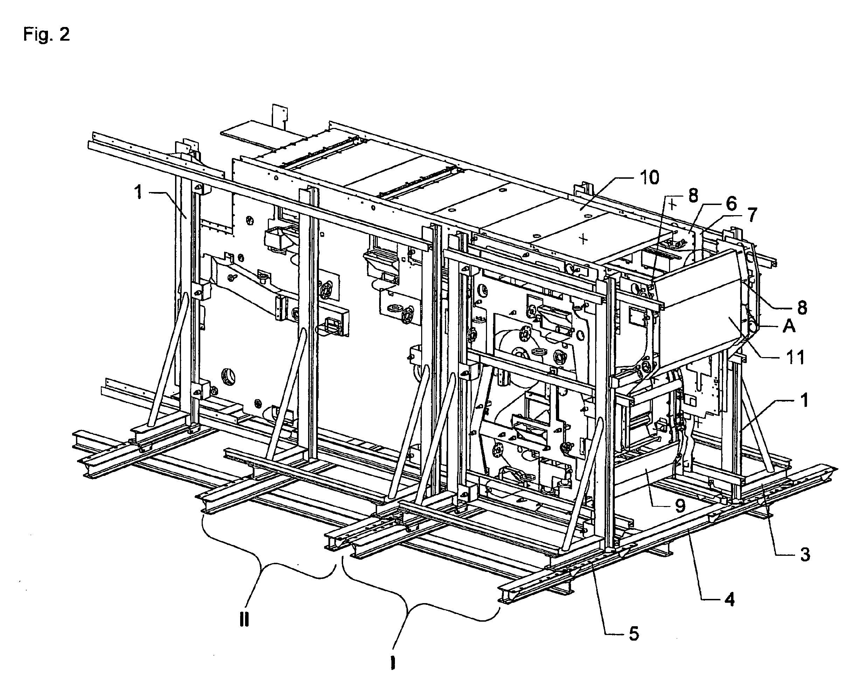

Die in Fig. 2 dargestellte Reinigungsmaschine ist kurz vor der Fertigstellung. Diese wurde abschnittsweise nach dem vorgenannten Prinzip gefertigt. Das gezeigte letzte Segment I wird bereits von oben verschlossen, wobei die Deckenmitteleinbauten 10 und die Frontmitteleinbauteile 11 gut erkennbar auf den freien Enden der herausragenden Stützelemente 8 ruhen. Die Reinigungsmaschine ist in dem Segment II und weiteren Segmenten komplettiert und nicht mehr mit dem Tragrahmen 1 verbunden, weiterhin sind die Montageschablonen 2 in diesen Segmenten entfernt.

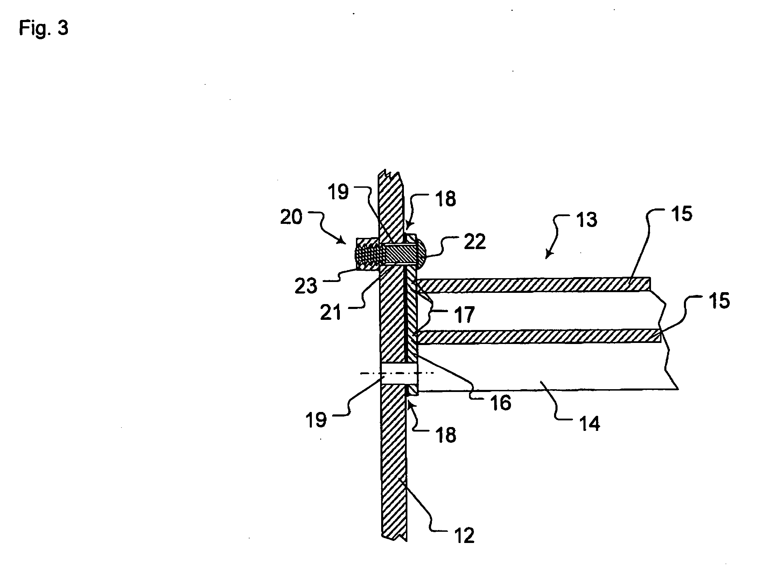

In Fig. 3 ist eine Schnittzeichnung durch eine einfache Seiten- oder Außenwand 12 und ein Mittelbauteil 13 gezeigt. Das Mittelbauteil 13 umfasst ein Bodenblech 14 und zwei senkrechte Trennbleche 15 welche im Wesentlichen auch senkrecht zur Seiten- oder Außenwand 12 der Maschine ausgerichtet sind. Am äußeren Ende des Bodenblechs 14 und der Trennbleche 15 sind Stirnelemente 16 angeordnet, von denen nur eines dargestellt wurde. Die Stirnelemente 16 wurden mittels eines Laserschweißverfahrens mit dem Bodenblech 14 und der Trennblechen 15 verbunden, wobei die Laserschweißnähten 17 in Fig. 3 angedeutet wurden. Zwischen Stirnelement 16 und Seiten- oder Außenwand 12 ist der Kleber 18 aufgetragen, der als dickere, durchgezogene Linie dargestellt wurde. Die Seiten- oder Außenwand 12 und das Stirnelemente 16 weisen Öffnungen 19 auf, durch die die Spannringbolzen 20 mit dem Schaft 21 geführt wurden. Ein Spannringbolzen 20 ist exemplarisch gezeigt, wobei pro Stirnelement 16 mehrere Öffnungen 19 und Spannringbolzen 20 vorgesehen sind. Der Spannringbolzen 20 wurde von innen nach außen durch die Öffnung 19 geführt, so dass der Bolzenkopf 22 im Innenraum der Maschine angeordnet ist und das geriffelte Ende des Schaftes 21 nach außen ragt und von dem Spannring 23 kraft- und formschlüssig umschlossen wird. Die in Fig. 3 dargestellte Einbausituation des Spannringbolzens 20 zeigt diesen nach dem Senkverfahren.

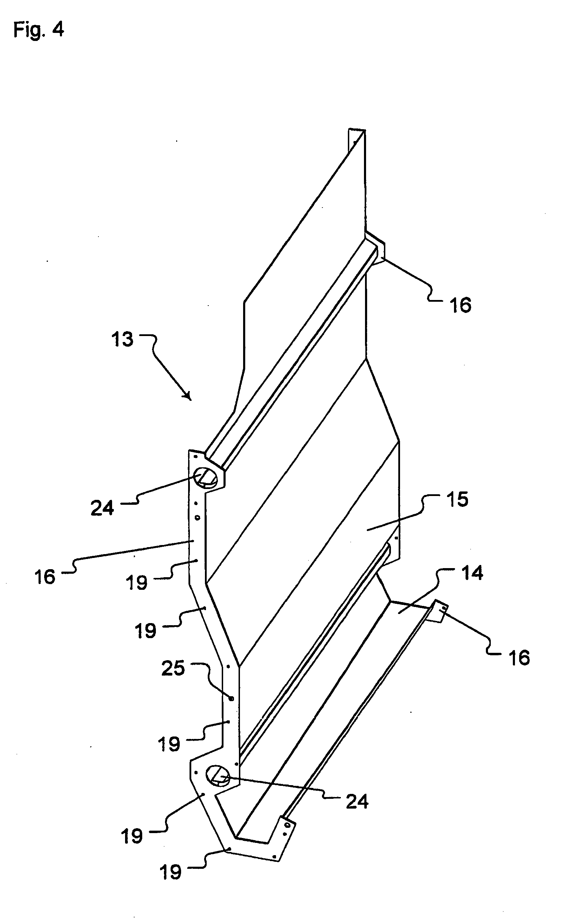

In perspektivischer Darstellung zeigt Fig. 4 ein einfaches Mittelbauteil 13, als mehrfach gebogenes Trenn- und Bodenblech 14 und 15 mit einigen weiteren funktionalen Elementen. An den äußeren Kanten sind die Stirnelemente 16 stumpf angeschweißt. In den Stirnelementen 16 sind mehrere Öffnungen 19 zu erkennen, durch welche die Bolzen geführt werden, um mit den nicht dargestellten Außen- oder Seitenwänden verbunden zu werden. Weiterhin sind Ver- und Entsorgungsöffnungen 24 und Positionieröffnungen 25 zu sehen. Wie weiter oben beschrieben, nehmen die Positionieröffnungen bei der Montage die Stützelemente zum beabstandeten Halten und Positionieren der Mitteleinbauten auf.

Damit wird ein vorteilhafter Effekt der Stirnelemente deutlich, der darin besteht, dass ein größerer konstruktiver Freiheitsgrad für die Anordnung der Stützelemente gegeben ist, wenn die Mitteleinbauten Stirnelemente aufweisen, da eine sehr große Fläche der Stirnelemente für die Anordnung von Positionieröffnungen zur Verfügung steht.

In dem vorliegenden Beispiel wurde als Kleber ein sogenannter Plastikstahl auf Epoxydharzbasis mit metallischen Füllkomponenten und Spannringbolzen mit einer Vorspannkraft von ca. 8 kN verwendet. Die Aushärtzeit wurde mit einer Infrarot-Wärmequelle beschleunigt.

Es ist erkennbar, dass das Verfahren und die Fertigungsvorrichtung für eine beliebig lange Maschine eingesetzt werden können.

## Patentansprüche

1. Verfahren zur Maschinenfertigung von Maschinen für die Getränkeindustrie, genommen aus der Gruppe der Reinigungsmaschinen, Pasteurisierungsmaschinen, Schrumpftunnel oder dergleichen, wobei die Bauteile der Maschine durch Schweißverfahren und durch lösbare Verbindungen aus Einzelteilen und/oder Baugruppen zusammengesetzt wird, wobei mindestens die folgenden Schritte durchlaufen werden:
a) Bereitstellen einer nicht zur Maschine gehörenden Haltevorrichtung, umfassend mindestens ein Halteelement, mittels welchem mindestens eine der Seitenwände der Maschine gestützt oder getragen werden kann,
b) Erstellen und Ausrichten mindestens eines Teils einer ersten Maschlnenseitenwand,
c) Erstellen und Ausrichten mindestens eines Teils einer zweiten, gegenüberliegenden Maschlhenseitenwand In einem Abstand, der geringfügig größer ist als der Abstand, den die Seitenwände nach vollständigem Zusammenbau zueinander aufweisen,
d) Positionieren von Mittelbauteilen (13) zwischen den Seitenwänden, wobei mindestens eine der Seitenwände Stützelemente (8) aufweisen, mittels welcher mindestens eine Teilzahl der Mitteleinbauten (13) gehalten und/oder von diesen getragen werden können,
e) Verschluss der Maschine durch Aneinanderpressung der gegenüberliegenden Seitenflächen und
f) Verschweißung mindestens eines Teils der Mitteleinbauten (13) mit den Seitenflächen, wobei idealerweise ein Laser- oder Elektronenstrahlschweißverfahren eingesetzt wird,
**dadurch gekennzeichnet, dass**
wenigstens ein Mittelbauteil mit wenigstens einer Seitenwand und insbesondere mit zwei Seitenwänden mittels Klebe- und Nietverfahren verbunden wird.

2. Verfahren nach Anspruch 1, **dadurch gekennzeichnet, dass** das Nietverfahren ein einseitiges Nietverfahren ist, bei welchem nur von einer Seite mittels eines Nietwerkzeuges auf die Niete eingewirkt wird, wie bei der Nietung einer Blindnlet oder eines Schließringbolzens.

3. Verfahren nach Anspruch 1 oder 2, **dadurch gekennzeichnet, dass** die Mitteleinbauten (13) Im Schritt d) zuerst an einer der beiden Seitenwände befestigt werden und hinsichtlich der zweiten, gegenüberliegenden und geringfügig beabstandeten Seitenwand von deren Stützelementen (8) lose gehalten werden.

4. Verfahren nach Ansprüche 1 bis 3, **dadurch gekennzeichnet, dass** mindestens ein Teil der Schweißverbindungen erfolgt, in dem von außen die im Inneren der Maschine stumpf anilegenden Mitteleinbauten (13) durch die Behälterwand hindurch an diese und/oder untereinander verschweißt werden.

5. Verfahren nach einem der vorstehenden Ansprüche, **dadurch gekennzeichnet, dass** die mittels Klebe- und Nietverfahren zu verbindenden Mitteleinbauten (13) an den zur Seitenwand parallelen oder weitgehend parallelen Außenkanten Stirnelemente (16) aufweisen, welche mit den Mitteleinbauten (13) wenigstens teilweise verschweißt sind, und deren bezüglich der Mitteleinbauten (13) außen liegenden Flächen der Stirnelemente (16) vor dem Schritt e) mit einem Kleber mindestens teilweises beschichtet werden.

6. Verfahren nach einem der vorstehenden Ansprüche, **dadurch gekennzeichnet, dass** die Anpressung der Klebeverbindung zwischen Seitenwand und Stirnelement (16) zur Erzeugung der erforderlichen Haft- und Haltekraft mittels des Nietverfahrens beziehungsweise mindestens einen Nietverbindung erfolgt.

7. Verfahren nach einem der vorstehenden Ansprüche, **dadurch gekennzeichnet, dass** die mit den Stirnelementen (16) in Kontakt stehenden Bereiche der Seitenwände von der Rückseite der Seitenwände zeitweise erwärmt werden, wobei Idealerweise ein Heizluftgebläse oder ein flammloser Strahler verwendet wird.

8. Verfahren nach einem der vorstehenden Ansprüche, **dadurch gekennzeichnet, dass** die erste Seitenwand aus im Wesentlichen zwei parallelen Elementen besteht, einer Innenwand (6) und einer Außenwand (7, 12), wobei die Innenwand (6) eine Vielzahl von Aussparungen und Öffnungen (19) aufweist, durch welche die Stützelemente (8) hindurchgeführt und/oder Innen- (6) und Außenwand (7, 12) miteinander verbunden werden können und welche die Mitteleinbauten (13) gemäß Schritt d) tragen und/oder stützen können.

9. Verfahren nach Anspruch 8, **dadurch gekennzeichnet, dass** die Stützelemente (8) in einem ersten Schritt an der Außenwand (7, 12) befestigt oder mit dieser verbunden werden und anschließend die Innenwand (6) auf die Stützelemente (8) geschoben wird.

10. Verfahren nach einem der vorstehenden Ansprüche, **dadurch gekennzeichnet, dass** die Seitenwände vor dem Zusammenbau Aussparungen und Öffnungen (19) aufweisen und mindestens ein Teil der Aussparungen und Öffnungen (19) in den Seitenwänden mittels eines Strahlverfahrens und idealerweise mittels Elektronen- oder Laserstrahlverfahren hergestellt werden.

11. Verfahren nach einem der vorgenannten Ansprüche, **dadurch gekennzeichnet, dass** vor dem Einbau In Schritt b) und/oder c) mindestens auf einer der Seitenwände mittels eines Elektronenstrahl- und/oder Laserstrahlverfahrens Bemaßungen und/oder Anrisslinien aufgebracht werden.

12. Verfahren nach einem der vorgenannten Ansprüche, **dadurch gekennzeichnet, dass** die Mitteleinbauten (13) vorgefertigte und aus mehreren oder einer Vielzahl von Einzelteilen bestehenden Komponenten sind.

13. Verfahren nach einem der vorgenannten Ansprüche, **dadurch gekennzeichnet, dass** die Mitteleinbauten (13) und sonstigen Einbauten der Maschine im Wesentlichen von untern nach oben eingebaut werden.

14. Verfahren nach einem der vorgenannten Ansprüche, **dadurch gekennzeichnet, dass** die Mitteleinbauten (13) ausschließlich mittels Klebe- und Nietverfahren an den Seitenwänden befestigt werden.

15. Verfahren nach einem der vorgenannten Ansprüche, **dadurch gekennzeichnet, dass** statt Nietverbindungen mindestens teilweise Schraubverbindungen vorgesehen werden.

16. Verfahren nach einem der vorgenannten Ansprüche, **dadurch gekennzeichnet, dass** der mindestens eine Niete ein Schließringbolzen ist und insbesondere ein Schließringbolzen, der mindestens eine Rille, vorteilhafterweise eine Vielzahl von Rillen auf seiner Außenkontur aufweist.

17. Verfahren nach einem der vorgenannten Ansprüche, **dadurch gekennzeichnet, dass** die Niete mit einer Vorspannkraft von über 3 kN belastet wird.

18. Verfahren nach einem der vorgenannten Ansprüche, **dadurch gekennzeichnet, dass** der Kleber ein Epoxydharz enthält,

19. Verfahren nach Anspruch 18, **dadurch gekennzeichnet, dass** der Kleber als Hauptkomponente Epoxydharz und weiterhin metallische oder keramische Stoffe enthält.

## Claims

1. Production method for machines for the beverage industry, taken from the group of cleaning machines, pasteurization machines, shrink tunnels or the like, wherein the components of the machine are assembled by welding processes and by detachable connections from individual parts and/or modules, wherein at least the following steps are run through:
a) Provision of a mounting device that is not part of the machine, comprising at least one mounting element, by means of which at least one of the side walls of the machine can be supported or carried,
b) Provision and alignment of at least a part of a first machine side wall,
c) Provision and alignment of at least a part of a second opposite machine side wall at a distance interval which is slightly greater than the distance interval which the side walls of the complete assembly exhibit to one another,
d) Positioning of centre mounting parts (13) between the side walls, wherein at least one of the side walls comprises support elements (8), by means of which at least a part number of the centre mounting parts (13) can be held and/or carried by these,
e) Closure of the machine by pressing the opposed side surfaces against one another,
f) Welding of at least a part of the centre mounting parts (13) to the side surfaces, wherein ideally laser or electron beam welding methods are used,
**characterised in that**
g) at least one centre mounting part is connected to at least one side wall, and in particular with two side walls, by means of adhesive bonding and riveting methods.

2. Method according to claim 1, **characterised in that** the riveting process is a one-side riveting method, with which the rivets are worked on by a riveting tool from one side only, such as riveting with a blind rivet or a compound rivet.

3. Method according to claim 1 or 2, **characterised in that** the central mounting parts (13) in step d) are first fastened to one of the two side walls, and, in respect of the second, opposite, and slightly distanced side wall, are held free of the support elements (8) thereof.

4. Method according to claims 1 to 3, **characterised in that** at least a part of the welded connections are carried out **in that** the centre mounting parts (13), abutting in the interior of the machine, are welded to it and/or to each other from the outside through the container wall.

5. Method according to any one of the preceding claims, **characterised in that** the centre mounting parts (13) to be connected by bonding or riveting methods comprise face elements (16) on the outer edges parallel or largely parallel to the side wall, which are at least partially welded to the centre mounting parts (13), the surfaces of the face elements (16) lying on the outside in respect of the centre mounting parts (13) are at least partially coated with an adhesive before step e).

6. Method according to any one of the preceding claims, **characterised in that** the pressing of the bonding connection between the side wall and face element (16) to produce the necessary adherence and retention strength is carried out by means of the riveting method or, respectively, by at least one rivet connection.

7. Method according to any one of the preceding claims, **characterised in that** the areas of the side walls in connection with the face elements (16) are heated for a time from the rear side of the side walls, wherein ideally a hot air blower or flameless radiator is used.

8. Method according to any one of the preceding claims, **characterised in that** the first side wall consists of essentially two parallel elements, an inner wall (6) and an outer wall (7, 12), wherein the inner wall (6) comprises a plurality of cut-outs and apertures (19), through which the support elements (8) are introduced and/or inner wall (8) and outer wall (7, 12) can be connected to one another, and which can carry and/or support the centre mounting parts (13) in accordance with step d).

9. Method according to claim 8, **characterised in that**, in a first step, the support elements (8) are secured to the outer wall (7, 12) or connected to this, and the inner wall (8) is then pushed onto the support elements (8).

10. Method according to any one of the preceding claims, **characterised in that** the side walls comprise cut-outs and apertures (19) before assembly, and at least a part of the cut-outs and apertures (19) are produced in the side walls by means of a beam method and ideally by means of electron beam or laser beam methods.

11. Method according to any one of the preceding claims, **characterised in that**, before the installation in step b) and/or c), dimensioning and/or marking lines are applied at least on one of the side walls by means of an electron beam and/or laser beam method.

12. Method according to any one of the preceding claims, **characterised in that** the centre mounting parts (13) are prefabricated components consisting of several or a plurality of individual parts.

13. Method according to any one of the preceding claims, **characterised in that** the centre mounting parts (13) and other installation parts of the machine are essentially installed from bottom to top.

14. Method according to any one of the preceding claims, **characterised in that** centre mounting parts (13) are secured exclusively by means of bonding and riveting methods to the side walls.

15. Method according to any one of the preceding claims, **characterised in that**, instead of rivet connections, screw connections are at least in part provided for.

16. Method according to any one of the preceding claims, **characterised in that** at least one rivet is a compound rivet and, in particular, a compound rivet which comprises at least one groove, and advantageously a plurality of grooves, on its outer contour.

17. Method according to any one of the preceding claims, **characterised in that** the rivet is subjected to a pre-tension force of over 3 kN.

18. Method according to any one of the preceding claims, **characterised in that** the adhesive is an epoxy resin.

19. Method according to claim 18, **characterised in that** the adhesive contains epoxy resin as its main component and other metallic or ceramic substances.

## Revendications

1. Procédé de fabrication de machines pour l'industrie des boissons, prises dans le groupe des machines de nettoyage, machines de pasteurisation, tunnels de rétraction ou similaires, les composants de la machine étant assemblés par soudage et par des liaisons amovibles de pièces individuelles et/ou de sous-groupes, les étapes suivantes étant au moins réalisées :
a) la mise à disposition d'un dispositif de retenue n'appartenant pas à la machine, comportant au moins un élément de retenue, à l'aide duquel au moins l'une des parois latérales de la machine peut être en appui ou portée,
b) l'établissement et l'orientation d'au moins une partie d'une première paroi latérale de machine,
c) l'établissement et l'orientation d'au moins une partie d'une seconde paroi latérale de machine en regard à une distance qui est légèrement plus grande que la distance que présentent les parois latérales après l'assemblage complet les unes par rapport aux autres,
d) le positionnement d'éléments intermédiaires (13) entre les parois latérales, au moins l'une des parois latérales présentant des éléments d'appui (8), à l'aide desquels au moins un nombre partiel des éléments intermédiaires (13) peut être maintenu et/ou porté par ceux-ci,
e) la fermeture de la machine par pressage des surfaces latérales en regard les unes contre les autres et
f) le soudage au moins d'une partie des éléments intermédiaires (13) avec les surfaces latérales, un soudage au faisceau laser ou d'électrons étant idéalement utilisé,
**caractérisé en ce que**
au moins un élément intermédiaire est relié à au moins une paroi latérale et en particulier à deux parois latérales par collage et rivetage.

2. Procédé selon la revendication 1, **caractérisé en ce que** le rivetage est un rivetage unilatéral, pour lequel on n'agit que d'un côté à l'aide de l'outil de rivetage sur les rivets comme pour le rivetage d'un rivet aveugle ou d'une tige à bague de serrage.

3. Procédé selon la revendication 1 ou 2, **caractérisé en ce que** les éléments intermédiaires (13) sont tout d'abord fixés à l'étape d) sur l'une des deux parois latérales et sont maintenus lâches en ce qui concerne la seconde paroi latérale en regard et légèrement espacée par leurs éléments d'appui (8).

4. Procédé selon les revendications 1 à 3, **caractérisé en ce qu'**au moins une partie des liaisons par soudage est réalisée, dans laquelle les éléments intermédiaires (13) reposant bout à bout à l'intérieur de la machine sont soudés de l'extérieur au travers de la paroi de récipient sur celle-ci et/ou entre eux.

5. Procédé selon l'une quelconque des revendications précédentes, **caractérisé en ce que** les éléments intermédiaires (13) à relier par collage et rivetage présentent des éléments avant (16) sur les arêtes extérieures parallèles ou largement parallèles à la paroi latérale, qui sont soudés au moins en partie aux éléments intermédiaires (13) et dont les surfaces extérieures par rapport aux éléments intermédiaires (13) des éléments avant (16) sont revêtues au moins en partie avant l'étape e) avec une colle.

6. Procédé selon l'une quelconque des revendications précédentes, **caractérisé en ce que** le pressage de la liaison par collage entre la paroi latérale et l'élément avant (16) est effectué pour la génération de la force de collage et de retenue nécessaire par rivetage ou au moins une liaison rivetée.

7. Procédé selon l'une quelconque des revendications précédentes, **caractérisé en ce que** les zones en contact avec les éléments avant (16) des parois latérales sont temporairement réchauffées par le côté arrière des parois latérales, une soufflante d'air chaud ou un radiateur sans flamme étant idéalement utilisé.

8. Procédé selon l'une quelconque des revendications précédentes, **caractérisé en ce que** la première paroi latérale se compose sensiblement de deux éléments parallèles, d'une paroi intérieure (6) et d'une paroi extérieure (7, 12), la paroi intérieure (6) présentant une pluralité d'évidements et d'ouvertures (19), par lesquels les éléments d'appui (8) peuvent être guidés et/ou la paroi intérieure (6) et la paroi extérieure (7, 12) peuvent être reliées entre eux et qui peuvent porter et/ou soutenir les éléments intermédiaires (13) selon l'étape d).

9. Procédé selon la revendication 8, **caractérisé en ce que** les éléments d'appui (8) sont fixés dans une première étape sur la paroi extérieure (7, 12) ou sont reliés à celle-ci puis la paroi intérieure (6) est poussée sur les éléments d'appui (8).

10. Procédé selon l'une quelconque des revendications précédentes, **caractérisé en ce que** les parois latérales présentent, avant l'assemblage, des évidements et ouvertures (19) et au moins une partie des évidements et ouvertures (19) dans les parois latérales est fabriquée à l'aide d'un procédé à faisceau et idéalement d'un procédé à faisceau d'électrons ou laser.

11. Procédé selon l'une quelconque des revendications précitées, **caractérisé en ce qu'**avant le montage à l'étape b) et/ou c), des cotations et/ou lignes de découpe sont appliquées au moins sur l'une des parois latérales à l'aide d'un procédé à faisceau d'électrons et/ou laser.

12. Procédé selon l'une quelconque des revendications précitées, **caractérisé en ce que** les éléments intermédiaires (13) sont des composants préfabriqués et composés de plusieurs ou d'une pluralité de pièces individuelles.

13. Procédé selon l'une quelconque des revendications précitées, **caractérisé en ce que** les éléments intermédiaires (13) et autres éléments de la machine sont installés sensiblement de bas en haut.

14. Procédé selon l'une quelconque des revendications précitées, **caractérisé en ce que** les éléments intermédiaires (13) sont exclusivement fixés par collage et rivetage sur les parois latérales.

15. Procédé selon l'une quelconque des revendications précitées, **caractérisé en ce que** des liaisons vissées sont prévues au moins en partie à la place des liaisons rivetées.

16. Procédé selon l'une quelconque des revendications précitées, **caractérisé en ce que** l'au moins un rivet est une tige à bague de serrage et en particulier une tige à bague de serrage qui présente au moins une rainure, avantageusement une pluralité de rainures sur son contour extérieur.

17. Procédé selon l'une quelconque des revendications précitées, **caractérisé en ce que** le rivet est sollicité par une force de précontrainte de plus de 3 kN.

18. Procédé selon l'une quelconque des revendications précitées, **caractérisé en ce que** la colle contient une résine époxy.

19. Procédé selon la revendication 18, **caractérisé en ce que** la colle contient comme composants principaux une résine époxy et en outre des substances métalliques ou céramiques.
